# EUROPEAN PATENT APPLICATION

(11) **EP 3 053 480 A1**
(43) Date of publication of application: **10.08.2016**
(21) Application number: 16151301.5
(22) Date of filing: 14.01.2016
(51) Int. Cl.: A45F 3/00, A45F 3/04, A45F 3/12

(54) **CARRYING SYSTEM**

(30) Priority: 04.02.2015 DE 102015201934
(71) Applicant: Oberalp Spa, 39100 Bozen (IT)
(72) Inventor: MADAU, Stefano, 39100 Bozen (IT); DE FILIPPI, Riccardo, 38123 Trento (IT)
(74) Representative: Feller, Frank

(57) **Abstract**

The present invention is directed to a carrying system (10) for a user to carry a load, the carrying system comprising at least one support portion (20-1, 20-2) adapted to be supported by the user when carrying the system, at least one detection device (22-1, 22-2) associated with the support portion and adapted to detect a detection result indicative of a force exerted to the user at the support portion, and notifying means, adapted to provide a notification based on the detection result.

## Description

The present invention relates to a carrying system for a user to carry a load, the carrying system comprising at least one support portion, such as a shoulder strap, adapted to be supported by the user when carrying the system. In particular, the present invention relates to carrying systems for outdoor sports and/or recreation equipment to be carried, for example, on the user's torso.

Carrying systems of the above-described type are known for example as backpacks which have left and right shoulder straps and usually have an additional hip strap, all of these straps exerting at least part of the overall weight of the carrying system on the user's torso. Thus, in the case of a backpack, the weight of the carrying system is exerted on the user mainly in three support portions, the left shoulder strap, the right shoulder strap and the hip strap.

The carrying comfort for the user carrying the system, in particular over long distances, depends on both the overall weight of the carrying system including any additional load which may be packed inside the carrying system (for example inside a backpack) and furthermore depends on the distribution of the load among multiple support portions. It is in general difficult for the user to assess the comfort of carrying such a system at the time of initially putting on the carrying system. A carrying system which feels apparently comfortable in the first place may become uncomfortable during a longer walk or, vice versa, it may turn out after longer walking that a certain configuration of the carrying is more gentle to the bones and muscles of the user. There is therefore a need for some more objective assessment or guideline for the user about the expected comfort of the carrying system, in particular during a longer use.

Another problem of a conventional carrying system arises if the load or weight of the carrying system is distributed inadequately among multiple support portions. Again, the user might not recognize a disadvantageous distribution of weight among left and right shoulder straps and a hip strap, for example when initially putting on the carrying system. Although the user could have significant influence on the load distribution by suitably packing a backpack or providing suitable tension to shoulder and hip straps, for example, the user is often not sufficiently aware of an inappropriate configuration of the carrying system. Furthermore, sometimes the user may have realized after a long walk that the load distribution and the individual tension of the shoulder and hip straps have been chosen advantageously such that the walk was very comfortable, however, when starting a next walk, the user may not recall such a suitable configuration and thus cannot make any benefit from the positive experience at the last walk.

It is therefore an object of the present invention to provide an improved carrying system having an objective assistance or guide for a user to appropriately configure a carrying system for a comfortable wearing, especially during longer usage.

The above-identified objective problem is solved by a carrying system for a user to carry a load, the carrying system comprising at least one support portion adapted to be supported by the user when carrying the system, at least one detection device associated with the support portion and adapted to detect a detection result indicative of a force exerted to the user at the support portion, and notifying means, adapted to provide a notification based on the detection result.

An important aspect of the present invention therefore is a detection device that is associated with the at least one support portion of the carrying system, i.e. with a portion at which at least a part of the weight of the carrying system is exerted on the user. Such a detection device is adapted to detect a detection result indicative of a force exerted on the user at this support portion, i.e. the detection device provides a measure of the pressure or weight that is imparted to the user at the support portion. The detection device in connection with a notifying means providing notification based on detection results achieves an objective indication or notification about the actual force or pressure applied at the support portion to the user. Therefore, the user does not have to rely upon his/her first impression on such a force or weight when initially putting on the carrying system, but can use objective information. Such objective information can also easily be compared with experiences from a previous usage of the carrying system by the user or by another user. In other words, a user may have an experience that he/she can comfortably bear a certain force or certain pressure at a certain support portion at his/her torso or body and the user can therefore assess in advance of a longer walk how comfortable or less comfortable the carrying system will be after a certain amount of time of usage.

Advantageously, the support portion can be arranged at a shoulder strap such that a significant amount of the weight of the carrying system which is usually exerted over a user's shoulder can be detected, and an objective measure of this force can be notified. Further, it is advantageous to provide a support portion and associated detection device at a hip portion, for example a hip strap of the carrying system because a significant amount of force is transferred from the carrying system to the user's body via the hip portion, in particular if a hip strap is provided.

In an appropriate embodiment, the carrying system according to the invention may have a first support portion and a second support portion different from the first support portion, the support portions being adapted to be supported by the user when carrying the system, a first detection device associated with the first support portion and adapted to detect a first detection result indicative of a force exerted to the user at the first support portion, and a second detection device associated with the second support portion and adapted to detect a second detection result indicative of a force exerted to the user at the second support portion, said notifying means being adapted to provide a notification based on the first detection result and the second detection result. If two or more support portions and associated detection devices are provided as described above, a comparison can be made between the detection results of different support portions such that not only a notification about the overall force or a pressure can be made but also a notification about a force distribution among two or more support portions. For example, if the first support portion is arranged at one of the left and right shoulder straps and the second support portion is arranged at the other one of the left and right shoulder straps and both support portions have associated detection devices, the carrying system may detect and notify a load balance between the left and right shoulder straps or may notify an uneven distribution of the weight. In most cases, it will be advantageous for a longer carrying to have an even or balanced load distribution on both sides, such that about the same force is exerted on the left shoulder and on the right shoulder, respectively.

Likewise, if a second or third support portion with an associated second or third detection device is arranged at a hip portion of the carrying system, it is possible to detect a distribution of forces exerted on the user at the shoulder and at the waist or hip, respectively. For example, many users underestimate the importance of supporting a significant part of the weight of the carrying system via a hip belt or a hip portion of the carrying system. The notifying means of the carrying system of the present invention may assist the user in imparting a sufficient amount of load to the hip portion by appropriately packing the carrying system or appropriately applying tension to a hip belt.

In a preferred embodiment of the present invention, the above advantages are combined in a carrying system in which the first support portion is arranged at a left shoulder strap and the second support portion is arranged at a right shoulder strap, wherein the carrying system further comprises a third support portion adapted to be supported by the user when carrying the system, the third support portion being arranged at the hip portion of the carrying system, and a third detection device associated with the third support portion and adapted to detect a third detection result indicative of a force exerted to the user at the third support portion, said notifying means being adapted to provide a notification based on the first, second and third detection results. Such a carrying system may provide notification based on a load distribution between left and right shoulder straps as well as based on a load distribution among shoulder straps and hip portion, respectively. Thus, the load distribution among these three most important portions at which most or all of the forces are usually exerted on the user, can be monitored and/or optimized based on objective detection results.

The at least one detection device (for example the first and/or second and/or third detection device) may include a resistive pressure sensor. Such a resistive pressure sensor can have a flexible element which changes electrical resistance depending on the pressure or force applied to it.

The carrying system according to the present invention may further include an electronic control unit which controls the at least one detection device and the notifying means. In particular, such an electronic control unit may comprise an electric power unit, a detection unit connected to the at least one detection device to receive the detection result and an output unit of the notifying means for outputting notification data based on the detection result. The electric power input may be adapted to be connected to a power source, such as a battery or may include such a power source to provide a mobile unit that can be carried by the user along with the carrying system. The power supplied through the power input may drive the detection unit as well as the output unit.

Preferably, the output unit is adapted to wirelessly transmit the notification data to a mobile device such that the actual user notification is performed by the mobile device via a display or the like, wherein the mobile device can be handled freely by the user as convenient.

In a further embodiment, the notifying means comprises software program code adapted to run on a mobile device, in particular a smartphone app, wherein the program code is arranged to wirelessly receive notification data based on the at least one detection result detected by the at least one detection device, to process the notification data and display on a display unit of the mobile device a notification based on the notification data. Using a software program code adapted to run on the mobile device allows sophisticated processing of notification data and user friendly types of notification, in particular by a dedicated smartphone app installable at standard smartphone platforms. If a software program code adapted to run on a smartphone is used or a smartphone is used as part of the notifying means, the number of hardware components and thus the costs of the system can be reduced, since standard smartphone functionality can be used as part of the system.

In general, the present invention can be applied to all types of carrying systems adapted to be carried by a user. In a preferred embodiment, however, the carrying system is a backpack. A backpack is used to carry some load, in particular over a longer time on the torso of the user, such that a suitable distribution of the load becomes an issue. Backpacks can usually be packed in different ways distributing more heavy parts of the load at certain places in or at the backpack and disposing lighter parts of the load in other positions. The carrying system of the present invention may assist the user in finding an optimum distribution of the parts of the load in accordance with the detection results of the at least one detection device. Therefore, the carrying system according to the invention allows to carry high loads over a long time.

In general, the carrying system of the present invention is preferably adapted for dedicated use as outdoor sports and/or recreation equipment such as alpine hiking, skiing, climbing, biking, e.g. mountain biking or road biking and the like. All these activities may involve the task of carrying relatively high loads over a longer distance or time such that the comfort of carrying the system may become particularly relevant.

The present invention will be further explained based on a preferred embodiment shown in the attached drawings in which:

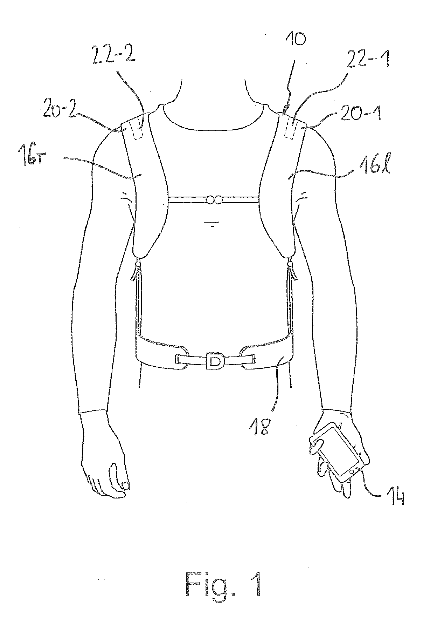

- Fig. 1: shows a front view of an embodiment of the present invention embodied as a backpack in a condition when carried on a user's torso;

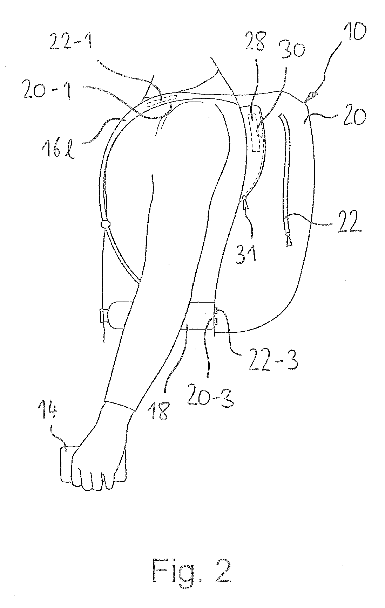

- Fig. 2: shows a side view of the embodiment;

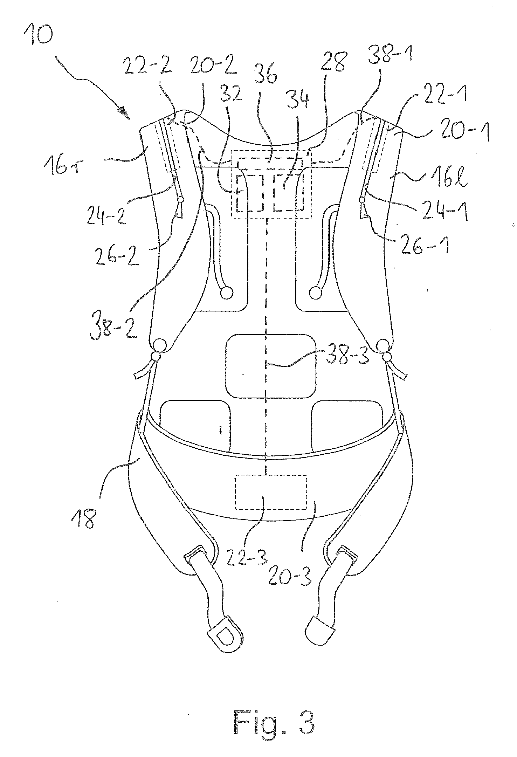

- Fig. 3: shows a front view of the embodiment in a condition in which the backpack is not carried by the user; and
- Fig. 4: shows a smartphone running a smartphone app dedicated for the present invention.

The carrying system of the embodiment of the present invention comprises a backpack 10 and a smartphone app 12 that runs on a smartphone 14. The backpack 10 has shoulder straps, for example a left shoulder strap 16l and a right shoulder strap 16r, and may further have a hip strap 18 surrounding the hip or waist of the user. In addition, the backpack 10 has a bag portion 20 to be carried on the user's back and which can receive a load through an opening 22. The opening 22 may be closed by a zipper or a similar element.

The overall weight of the carrying system, i.e. the weight of the load received in the bag portion 20 plus the weight of the empty carrying system with the load being removed, is exerted on the user's torso via the above-mentioned shoulder straps 16l, 16r and the hip strap 18. In particular, portions of these straps, where a major part of the force or a local maximum force is exerted on the user, are defined as support portions. Thus, in the present embodiment, a first support portion 20-1 is formed at the upper portion of the left shoulder strap 16l, where the left shoulder strap 16l lies on top of the user's left shoulder, a second support portion 20-2 is formed at the right shoulder strap 16r, where the right shoulder strap lies on top of the right shoulder of the user, and a third support portion 20-3 is formed at a hip portion of the carrying system, in particular a lower central back portion of the user or a rear portion of the hip strap 18.

According to the present invention, a detection device is positioned at at least one of the above-mentioned support portions. Preferably, a first detection device 22-1 is arranged at the first support portion 20-1, a second detection device 22-2 is arranged at the second support portion 20-2, and a third detection device 22-3 is arranged at the third support portion 20-3. Each detection device may include a resistive pressure sensor having a flexible plate-shaped member which is well-suited to be fixed at the shoulder or hip straps 16l, 16r, 18. Any suitable type of pressure sensor can be implemented. For example, the pressure sensor may be composed of two electrodes printed on a flexible printed circuit board connected to a reading system. A layer of resistive material may be provided to be movable over the flexible printed circuit board such as to be in contact with the electrodes printed on the flexible printed circuit board. Thus, with increasing pressure or force exerted on the sensor, the electrical resistance between the two electrodes decreases. If the sensor is integrated in a detection circuit, the variable resistance of the sensor may be measured by measuring a current flowing through the sensor or by measuring a voltage drop at the sensor. The detection signal received from the sensor may further be converted into digital signals for further processing and/or transmission to a detection unit or notification means as will be described later.

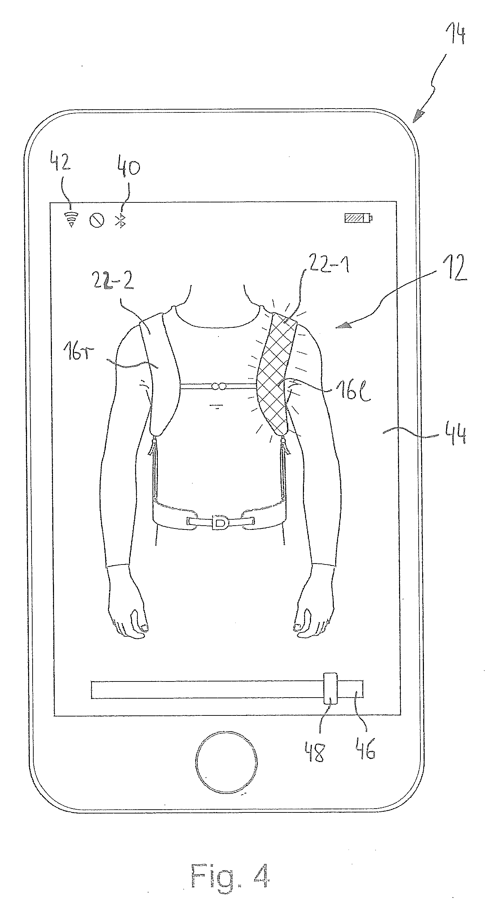

The detection devices 22-1, 22-2, 22-3 may be integrated into the straps 16l, 165, 18, such as inserted into a dedicated pocket formed at the straps. As shown in Fig. 4 for the example of the shoulder straps 161, 16r, the detection devices 22-1 and 22-2 may be inserted into pockets 24-1 and 24-2 that may be closable and openable by means of a zipper 26-1 and 26-2 to allow easy maintenance or replacement of detection devices.

The carrying system according to the embodiment may further have an electronic control unit 28 fixed to the backpack 10 such as to be carried along with the user. For example, the electronic control unit 28 may be placed inside a dedicated pocket 30. The pocket 30 may be openable and closable by a further zipper 31. However, other arrangements are conceivable. Conveniently, the electronic control unit 28 could be carried at the back of the user, for example could be integrated into the bag portion 20 of the backpack 10.

The electronic control unit 28 preferably comprises a power source 32 such as a battery, a detection unit 34 and an output unit 36. The electronic control unit 28 is preferably connected to the detection devices 22-1, 22-2 and 22-3 by means of wires 38-1, 38-2 and 38-3 that may be integrated into the material (for example the textile material) of the backpack 10. Alternatively, a wireless connection of a known type could be implemented for the communication between the detection devices 22-1, 22-2 and 22-3 and the electronic control unit 28.

A mode of operation and certain functions of the carrying system according to the present invention are explained in the following by way of example.

When the carrying system is switched on, the electric power source 32 drives the electric control unit 28 and the detection devices 22-1, 22-2 and 22-3 connected thereto, such that the detection results provided by the detection devices 22-1, 22-2 and 22-3, i.e. electric signals depending on the pressure or force detected by the detection devices, are transmitted to the detection unit 34. For this purpose, the wires 38-1, 38-2, 38-3 may be used to transmit electric power for operation of the detection devices 22-1, 22-2, 22-3 as well as to transmit electrical detection signals representing the detection results. Alternatively, the detection devices 22-1, 22- and 22-3 may have their own power sources or may be passive elements.

The at least one detection result is then transmitted from the detection unit 34 to the output unit 36. The output unit 36 then outputs notification data and sends the notification data wirelessly for reception by the mobile device 14.

The mobile device 14, preferably a smartphone having voice and data communication and telephone functionalities, runs a software program code, preferably a smartphone app 12, which forms part of the notification means and controls the smartphone 14 to receive the notification data sent by the output unit 36. The wireless communication between the output unit 36 and the mobile device 14 may use a bluetooth standard technology 40 or may use wireless local area network (WLAN) technology, such as WIFI standard technology 42.

Furthermore, the software program code run in the mobile device 40 may process the notification data received by the output unit 36 such as to bring it into a format suitable for notification, for example display notification via a display 44 of the mobile device 14.

In the preferred embodiment shown in Fig. 4, the software program code shows on the display 44 a picture or schematic representation of the backpack 10 which makes visible at least the three support portions 20-1, 20-2 and 20-3 as a virtual representation. The software program code may then be adapted to indicate the detection result received from the output unit 36 in any suitable manner, for example by highlighting one of the representations of the support portions at which a detection result of the associated detection device is significantly higher or lower than at the other portions. Each of the representations of the support portions 20-1, 20-2, 20-3 may also individually indicate an amount of force detected at the associated support portions 20-1, 20-2, 20-3 by means of a certain color, by displaying a number or the like. For example, in the case shown in Fig. 4, the system detected that the first detection device 22-1 at the left shoulder strap 16l receives a higher force than the second detection device 22-2 at the right shoulder strap 16r and the software program code notifies such a result by coloring the representation of the left shoulder strap 16l in red color and coloring the representation of the right shoulder strap 16r with green color.

Furthermore, the software program code may display a balancing bar 46 running horizontally and having a slider 48 at a certain position along the bar which indicates an overall left/right balancing of the load distribution. In the example shown in Fig. 4, where the load is unbalanced towards the left side, the slider 48 is moved towards the end of the balancing bar 46 which is associated with the representation of the left shoulder strap 16l. Therefore, the user may consider repacking of the backpack until the slider 48 is positioned in the center of the balancing bar 46 and the representations of the shoulder straps 16l, 16r show similar colors or other equal indications.

Similar indications could be used for the hip portion of the carrying system. Thus, based on values pre-stored in the mobile device 14 by the software program code, a notification can be made as to whether the pressure received by the third detection device 22-3 at the hip portion is lower, equal or higher than a predetermined optimum value for the hip portion.

For each of the support portions 20-1, 20-2, 20-3, the software program code may store predetermined optimum values which may be pre-stored by the software program code or may be values inputted by the user and stored in the mobile device 14, such that the user may input and store her/his preferred load distribution. The software program code may be adapted to store multiple sets of load distribution values. The notification may indicate for each of the support portions 20-1, 20-2 and 20-3 whether the pressure or force detected by the associated detection device 22-1, 22-2 and 22-3 is lower, equal or higher than the respective pre-stored value. The user can then easily monitor a current load distribution and retrieve previous packaging configurations.

## Claims

1. Carrying system (10) for a user to carry a load, the carrying system comprising
at least one support portion (20-1, 20-2, 20-3) adapted to be supported by the user when carrying the system,
at least one detection device (22-1, 22-2, 22-3) associated with the support portion and adapted to detect a detection result indicative of a force exerted to the user at the support portion, and
notifying means (36, 12), adapted to provide a notification based on the detection result.

2. Carrying system according to claim 1, **characterized in that** the support portion (20-1, 20-2, 20-3) is arranged at a shoulder strap (16l, 16r) or a hip portion (18) of the carrying system.

3. Carrying system according to claim 1 or claim 2, **characterized by** a first support portion (20-1) and a second support portion (20-2, 20-3) different from the first support portion, the support portions being adapted to be supported by the user when carrying the system,
a first detection device (22-1) associated with the first support portion and adapted to detect a first detection result indicative of a force exerted to the user at the first support portion (20-1), and
a second detection device (22-2, 22-3) associated with the second support portion and adapted to detect a second detection result indicative of a force exerted to the user at the second support portion (20-2, 20-3),
said notifying means (36, 12) being adapted to provide a notification based on the first detection result and the second detection result.

4. Carrying system according to claim 3, **characterized in that** the first support portion (20-1) is arranged at one of left and right shoulder straps (161, 16r) and the second support portion (20-2) is arranged at the other one of the left and right shoulder straps or is arranged at a hip portion (18) of the carrying system.

5. Carrying system according to claim 3, **characterized in that** the first support portion (20-1) is arranged at a left shoulder strap (16l) and the second support portion (20-2) is arranged at a right shoulder strap (16r),
wherein the carrying system further comprises
a third support portion (20-3) adapted to be supported by the user when carrying the system, the third support portion being arranged at the hip portion (18) of the carrying system, and
a third detection device (22-3) associated with the third support portion and adapted to detect a third detection result indicative of a force exerted to the user at the third support portion,
said notifying means being adapted to provide a notification based on the first, second and third detection results.

6. Carrying system according to any of the preceding claims, **characterized in that** the at least one detection device (22-1, 22-2, 22-3) includes a resistive pressure sensor.

7. Carrying system according to any of the preceding claims, **characterized in that**, the carrying system further includes an electronic control unit (28) comprising:
an electric power input (32),
a detection unit (34) connected to the at least one detection device (22-1, 22-2, 22-3) to receive the detection result, and
an output unit (36) of the notifying means for outputting notification data based on the detection result.

8. Carrying system according to claim 7, **characterized in that**, the output unit (36) is adapted to wirelessly transmit the notification data to a mobile device (14).

9. Carrying system according any of the proceeding claims, **characterized in that** the notifying means comprises software program code (12) adapted to run on a mobile device (14), in particular a smartphone app, wherein the program code is arranged to
- wirelessly receive notification data based on the at least one detection result detected by the at least one detection device (22-1, 22-2, 22-3),
- process the notification data and
- display on a display unit (44) of the mobile device (14) a notification based on the notification data.

10. Carrying system according any of the proceeding claims, **characterized in that** the carrying system is a backpack (10).

11. Carrying system according any of the proceeding claims, **characterized in that** the carrying system is adapted for dedicated use as outdoor sports and/or recreation equipment.
